# FASCICULE DE BREVET EUROPEEN

(11) **EP 0 590 737 B1**
(45) Date de publication et mention de la délivrance du brevet: **18.12.1996**
(21) Numéro de dépôt: 93202991.1
(22) Date de dépôt: 17.01.1991
(51) Int. Cl.: A01C 17/00

(54) **Dispositif pour épandre de la matière épandable**
Vorrichtung zur Ausstreuung eines körnigen Materials
Apparatus for spreading spreadable material

(30) Priorité: 19.01.1990 NL 9000139
(43) Date de publication de la demande: 06.04.1994
(62) Demande divisionnaire de: 91200081.7
(73) Titulaire: C. van der Lely N.V., NL-3155 PD Maasland (NL)
(72) Inventeur: van den Berg, Karel, NL-2971 BR Bleskensgraaf (NL); van der Waal, Pieter Jacob, NL-3145 LB Maassluis (NL)
(74) Mandataire: Mulder, Herman

(56) Documents cités:
- EP-A- 0 472 855
- DE-A- 3 310 424
- DE-A- 3 641 080
- DE-A- 3 642 502

## Description

Le dispositif en question concerne un dispositif pour épandre de la matière épandable, par exemple des engrais chimiques ou des semences, muni d'un réservoir pour la matière à épandre, un organe épandeur et un système de dosage avec une unité de mémoire, dans laquelle des données de dosage préprogrammées comportant la relation entre la coulée de masse de la matière à épandre et la position de soupape dans le système de dosage sont stockées, le système de dosage pouvant régler la position de soupape à l'aide de ces données préprogrammées et des paramètres qui sont introduits dans l'unité de mémoire et sont obtenus externement et qui déterminent directement la coulée de masse désirée, la relation précitée étant étalonnée par l'exécution d'un essai (voir DE-A-3641080).

Dans la pratique c'est connu d'exécuter un essai pareil dans un intervalle de temps, qui est fixé auparavant. Dépendant du dosage en unités de poids par unité de temps désiré et de l'espèce de la matière à épandre, le poids de la matière écoulé du réservoir durant le temps d'essai peut différer considerablement. Dans le cas la quantité de la matière écoulée du réservoir durant le temps d'essai est basse, la précision de l'essai peut être insuffisante.

Le but de l'invention est de perfectionner l'exécution d'un essai pareil. Conformément à l'invention ce but est atteint parce que le dispositif, comme celui-ci est décrit ci-dessus est caractérisé en ce que dans l'unité de mémoire est fixée une quantité de poids de matière épandable désirée à essayer, et en ce qu'avec cette dernière donnée et les paramètres, obtenus externement, on peut fixer un temps d'essai.

Au lieu d'exécuter l'essai dans un intervalle de temps, qui est fixé auparavant, l'essai est conformément à l'invention exécuté après avoir determiné un temps d'essai en dépendance d'une quantité de poids de matière épandable désirée à essayer et fixée dans l'unité de mémoire et des paramètres, obtenus externement. Dans une forme de réalisation particulière cette quantité de poids, registrée dans l'unité de mémoire est 20 à 30 kg, de préférence 25 kg. Les paramètres externes peuvent comprendre entre autres le dosage en unités de poids par unité de surface de la matière à épandre, la largeur d'épandage et la vitesse de l'avancement du tracteur, avec laquelle le dispositif peut être déplacé.

De plus il peut y avoir en particulier des moyens de correction, à l'aide desquels on peut, après avoir fait l'essai et déterminé le poids de la matière écoulée du réservoir durant le temps d'essai, faire des corrections sur la relation précitée dans l'unité de mémoire.

Dans une forme de réalisation avantageuse de l'invention les données de dosage préprogrammées fixent une caractéristique-standard, dans laquelle le rapport entre la position de soupape dans le système dosage et la quantité de matière, coulant du réservoir, par unité de temps est indiqué. Cette caractéristique-standard peut être fixée des caractéristiques correspondantes, qui sont déterminées pour une ou plus de sortes de matière. De plus il y a, conformément à l'invention, des moyens de correction, à l'aide desquels on peut faire des corrections de la caractéristique-standard en provenance des paramètres, qui sont obtenus externement. De plus il peut y avoir en particulier des premiers moyens de comparateur, à l'aide desquels on obtient un premier signal, qui indique, que, lorsque les corrections sur la caractéristique-standard sont situées en dehors d'une première valeur limite, qui est introduite auparavant, un second essai peut être réalisé, parce que la caractéristique-standard corrigée peut donc être insuffisamment précise. Cette première valeur limite peut être déterminée par des écarts de la caractéristique-standard d'environ 12%. De plus il peut y avoir des seconds moyens de comparateur, à l'aide desquels on obtient un second signal, qui indique, que, lorsque les corrections sur la caractéristique-standard sont situées en dehors d'une seconde valeur limite, un second essai doit être effectué, parce que la caractéristique-standard ne peut donc être corrigée du tout. Cette seconde valeur limite peut être fixée par des écarts de la caractéristique d'environ 40%.

Dans une forme de réalisation spéciale le paramètre, qui est obtenu externement et qui représente le dosage réglé en unités de poids par unité de surface, peut être changé pas à pas, alors que les pas sont 1 - 20% et de préférence environ 5% du dosage réglé.

Selon un autre aspect de l'invention il y a des troisièmes moyens de comparateur, à l'aide desquels le nombre de tours mesuré du disque éjecteur ou des disques éjecteurs de l'organe épandeur est comparé au nombre de tours désiré, qui concorde avec les paramètres, obtenus externement, et à l'aide duquel une indication de faute est provoquée en cas d'absence de concordance dans certaines limites. A ceci le nombre de tours du disque éjecteur ou des disques éjecteurs peut être mesuré avec un détecteur se trouvant sur un disque éjecteur.

Quoique le système de dosage puisse être dirigé électroniquement, il y a de préférence un ordinateur, qui comprend l'unité de mémoire et/ou les moyens de correction et/ou un ou plus des moyens de comparateur nommés.

D'autres objets et caractéristiques de l'invention ressortiront de la description ci-après, en se référant aux dessins ci-annexés, qui représentent, à titre d'exemples non limitatifs, quelques formes de réalisation du dispositif selon l'invention. Sur ces dessins:
La figure 1 représente un diagramme, dans lequel on a représenté des données préprogrammées dans la forme d'une caractéristique-standard.

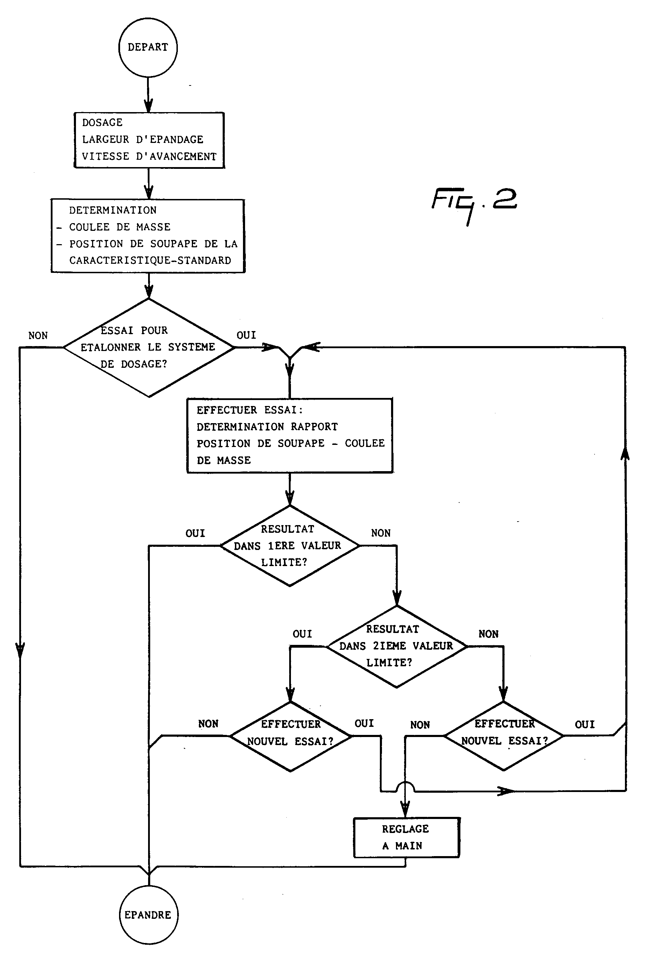

La figure 2 représente un diagramme de courant, à l'aide duquel le fonctionnement du dispositif conforme à l'invention sera expliqué.

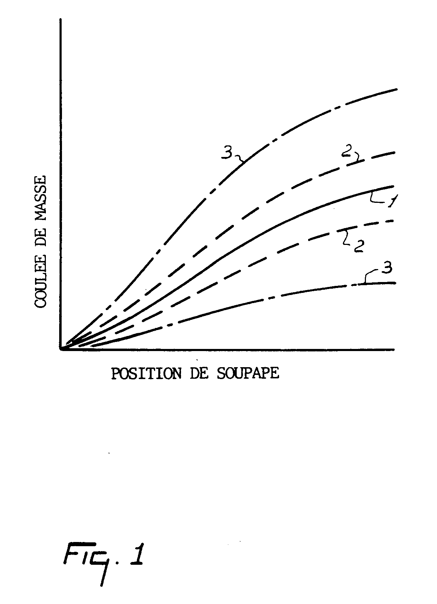

Dans un dispositif pour épandre de la matière épandable, par exemple des engrais chimiques ou de la semence, quel dispositif comprend de la manière usuelle un réservoir pour la matière à épandre, un organe épandeur et un système de dosage, le système de dosage est muni, conformément à l'invention, d'une unité de mémoire, laquelle est réalisée de préférence comme EPROM et dans laquelle sont stockées les données de dosage préprogrammées. Le système de dosage peut être dirigé électriquement ou électroniquement, de préférence à l'aide d'un ordinateur, afin qu'avec celui-ci ainsi on puisse régler automatiquement un dosage en vertu des paramètres, obtenus externement, et des données de dosage préprogrammées nommées. Les paramètres, qui sont obtenus externement, sont formés par la largeur d'épandage, la vitesse d'avancement du tracteur, avec laquelle le dispositif peut être déplacé, et le dosage en unités de poids par unité de surface, à nommer ci-après "dose". Les données de dosage préprogrammées déterminent entre autres une caractéristique-standard, qui est indiquée sur la figure 1 avec le chiffre 1 et dans laquelle est représenté le rapport entre la position de soupape dans le système de dosage et la coulée de masse, ceci est la quantité de matière, qui écoule du réservoir, par unité de temps. La coulée de masse est alors déterminée par le produit de la "dose", de la largeur d'épandage et de la vitesse de l'avancement. De la coulée de masse on peut déterminer, à l'aide de la caractéristique-standard, une position de soupape appartenante. Avec un certain choix des paramètres susnommés, qui sont obtenus externement, on peut obtenir de cette manière un réglage précis du système de dosage. Ainsi la matière épandable peut être épandue de manière précise.

A l'origine la caractéristique-standard est établie à l'aide de certaines caractéristiques, qui répondent à une ou à plusieurs sortes de matières. La caractéristique-standard peut être considérée par conséquent comme une sorte de caractéristique moyenne pour différentes matières épandables. Ceci signifie, qu'en cas d'une certaine position de soupape on n'obtiendra pas toujours la coulée de masse, qui est déterminée selon la caractéristique-standard. La caractéristique-standard doit être corrigée par conséquent pour des sortes de matière spécifiques. Pour ceci on fait un essai. Un essai pareil est fait à force de placer sous l'ouverture d'écoulement dans le réservoir une boîte d'essai, qui est destinée pour cela. Ensuite on règle la position de soupape, qui est basée sur les paramètres, obtenus externement, quelle position de soupape est tenue ouverte durant un temps déterminé. Dans ce temps déterminé la quantité de poids de matière, qu'on a laissée passer du réservoir, est recueillie dans la boîte d'essai et pesée. Lorsque la coulée de masse, déterminée de l'essai, diffère de la coulée de masse, comme celle-ci devrait être en vertu de la caractéristique-standard, la caractéristique-standard est donc automatiquement adaptée à la valeur de coulée de masse nouvellement obtenue, à moins qu'en vertu de l'écart constaté on devrait appliquer une correction, qui est située hors d'une première valeur limite, qui est introduite auparavant (voir les courbes 2 de la figure 1). Pour l'adaptation automatique de la caractéristique-standard, en cas que les corrections à faire en vertu de l'essai sont petites, il y a un programme d'adaptation, qui est spécialement introduit dans l'ordinateur pour cela. La prémière valeur limite susdite est déterminée par des écarts de la caractéristique-standard d'environ 12%. Le contrôle, si la coulée de masse, qui est déterminée avec l'essai, est située dans la première valeur limite, se fait à l'aide des premiers moyens de comparateur, qui se trouvent dans l'indicateur; à l'aide de ces moyens de comparateur on obtient un premier signal, qui indique, que, si les corrections sur la caractéristique-standard sont situées hors de la première valeur limite, on peut effectuer un second essai, parce que la caractéristique-standard corrigée peut donc être insuffisamment précise. Avant que la décision soit prise, si un second essai pareil doit être effectué, on détermine d'abord avec les seconds moyens de comparateur, qui se trouvent dans l'indicateur, si les corrections sur la caractéristique-standard sont situées ou non hors d'une seconde valeur limite, qui est introduite auparavant (voir les courbes 3 sur la figure 1). La seconde valeur limite susdite est déterminée par des écarts de la caractéristique-standard d'environ 40%. Si un second signal, rendu par les seconds moyens de comparateur, indique, que les corrections ne sont pas situées hors de la seconde valeur limite, la question se pose, s'il est considéré désirable de réaliser un nouvel essai. S'il est établi que les corrections sur la caractéristique-standard sont situées hors de la seconde valeur limite, on indique par cela que la caractéristique-standard n'est pas corrigée et qu'un second essai doit être réalisé, à moins qu'on passe à un réglage à main du système de dosage. Avec le second essai on contrôle au fond le premier essai. C'est à dire que les résultats des deux essais peuvent différer, parce que dans le réservoir peuvent se trouver des souillures, comme par exemple des morceaux de papier ou bien parce que la matière à épandre comporte des mottes, qui empêchent l'écoulement de la matière. S'il parait après l'exécution du second essai, qu'on obtient environ les mêmes résultats que lors de l'exécution du premier essai, la caractéristique-standard est automatiquement adaptée aux résultats du second essai. Après qu'on a obtenu de cette manière une caractéristique-standard, qui est complètement adaptée à la matière d'épandage spécifique, on peut donner le départ à l'épandage propre de la matière. Lors de l'épandage propre, on peut s'écarter de "la dose", qui est réglée auparavant, dépendant de l'état de la parcelle de terre concernante; cet écart peut être changé par étapes de 1 à 20% et de préférence par étapes de 5% de la dose réglée.

## Revendications

1. Dispositif pour épandre de la matière épandable, par exemple des engrais chimiques ou des semences, muni d'un réservoir pour la matière à épandre, un organe épandeur et un système de dosage avec une unité de mémoire, dans laquelle des données de dosage préprogrammées comportant la relation entre la coulée de masse de la matière à épandre et la position de soupape dans le système de dosage sont stockées, le système de dosage pouvant régler la position de soupape à l'aide de ces données préprogrammées et des paramètres qui sont introduits dans l'unité de mémoire et sont obtenus externement et qui déterminent directement la coulée de masse désirée, la relation précitée étant etalonnée par l'exécution d'un essai, caractérisé en ce que dans l'unité de mémoire est fixée une quantité de poids de matière épandable désirée à essayer, et en ce qu'avec cette dernière donnée et les paramètres, obtenus externement, on peut fixer un temps d'essai.

2. Dispositif selon la revendication 1, caractérisé en ce que la quantité de poids de matière épandable désirée à essayer est 20 à 30 kg et de préférence environ 25 kg.

3. Dispositif selon la revendication 1 ou 2, caractérisé en ce qu'il y a des moyens de correction, à l'aide desquels on peut, après avoir fait l'essai et déterminé le poids de la matière écoulée du réservoir durant le temps d'essai, faire des corrections sur la relation précitée dans l'unité de mémoire.

4. Dispositif selon la revendication 3, caractérisé en ce qu'il y a un ordinateur, qui comprend l'unité de mémoire et/ou les moyens de correction.

5. Dispositif selon l'une des revendications précédentes, caractérisé en ce que les paramètres, qui sont obtenus externement, comprennent le dosage en unités de poids par unité de surface de la matière à épandre, la largeur d'épandage et la vitesse d'avancement du tracteur, avec laquelle le dispositif peut être déplacé.

## Claims

1. Device for spreading spreadable material, for example chemical fertilizers or seeds, said device being equipped with a reservoir for the material to be spread, a spreading element and a dosing system having a memory unit, in which is stored preprogrammed dosage data including the relationship between the mass flow of the material to be spread and the valve position in the dosing system, the dosing system being able to regulate the valve position with the aid of this preprogrammed data and parameters which are input into the memory unit and are obtained externally and which determine directly the desired mass flow, the above-mentioned relationship being calibrated by carrying out a test, characterised in that specified in the memory unit is a weight quantity of spreadable material to be tested, and in that with this latter data and the parameters, obtained externally, a test time can be specified.

2. Device according to claim 1, characterised in that the weight quantity of spreadable material to be tested is 20 to 30 kg and preferably approximately 25 kg.

3. Device according to claim 1 or 2, characterised in that there are correction means, with the aid of which, after having carried out the test and determined the weight of the material which flowed from the reservoir during the test time, corrections can be made to the above-mentioned relationship in the memory unit.

4. Device according to claim 3, characterised in that there is a computer which comprises the memory unit and/or the correction means.

5. Device according to one of the preceding claims, characterised in that the parameters, which are obtained externally, comprise the dosage in units of weight of the material to be spread per unit area, the spreading width and the speed of forward movement of the tractor with which the device can be moved.

## Patentansprüche

1. Vorrichtung zum Streuen von streufähigem Gut, beispielsweise von Kunstdünger oder Saatgut, mit einem Behälter für das Streugut, einem Streugutverteiler und einem Dosiersystem mit einer Speichereinheit, in der vorprogrammierte Dosierdaten gespeichert sind, die die Relation zwischen dem Materialfluß des Streugutes und der Schieberstellung in dem Dosiersystem enthalten, wobei von dem Dosiersystem die Schieberstellung mittels dieser vorprogrammierten Daten und mittels Parametern zu steuern ist, die in die Speichereinheit eingegeben und extern ermittelt werden, und die den gewünschten Materialfluß unmittelbar bestimmen, und wobei die vorgenannte Relation nach Ausführung eines Probelaufes eingestellt wird,
dadurch gekennzeichnet, daß in der Speichereinheit eine Streugutmenge zur Ausführung des Probelaufes gespeichert ist, und daß mittels dieser Daten und der extern ermittelten Parameter die Dauer des Probelaufes zu bestimmen ist.

2. Vorrichtung nach Anspruch 1,
dadurch gekennzeichnet, daß die Streugutmenge zur Ausführung des Probelaufes 20 bis 30 kg und vorzugsweise etwa 25 kg beträgt.

3. Vorrichtung nach Anspruch 1 oder 2,
dadurch gekennzeichnet, daß eine Korrekturvorrichtung vorgesehen ist, mittels der nach Ausführung des Probelaufes und Ermittlung der während des Probelaufes aus dem Behälter ausgeströmten Gutmenge Korrekturen der vorgenannten Relation in der Speichereinheit durchzuführen sind.

4. Vorrichtung nach Anspruch 3,
dadurch gekennzeichnet, daß eine Datenverarbeitungsanlage vorgesehen ist, die die Speichereinheit und/oder die Korrekturvorrichtung enthält.

5. Vorrichtung nach einem der vorhergehenden Ansprüche,
dadurch gekennzeichnet, daß die extern ermittelten Parameter die Dosierung des Streugutes in Gewichtseinheiten pro Flächeneinheit, die Streubreite und die Fahrgeschwindigkeit des Schleppers enthalten, mit dem die Vorrichtung zu verfahren ist.
